# FASCICULE DE BREVET EUROPEEN

(11) **EP 1 963 164 B1**
(45) Date de publication et mention de la délivrance du brevet: **20.01.2010**
(21) Numéro de dépôt: 06820296.9
(22) Date de dépôt: 16.10.2006
(51) Int. Cl.: B62D 7/15, B62D 6/00

(54) **PROCEDE ET DISPOSITIF DE COMMANDE DE L'ANGLE DE BRAQUAGE DE ROUE ARRIERE D'UN VEHICULE AUTOMOBILE**
VERFAHREN UND VORRICHTUNG ZUR STEUERUNG DES DREHWINKELS EINES KRAFTFAHRZEUGHINTERRADS
METHOD AND DEVICE FOR CONTROLLING TURNING ANGLE OF A MOTOR VEHICLE REAR WHEEL

(30) Priorité: 23.12.2005 FR 0513228
(43) Date de publication de la demande: 03.09.2008
(73) Titulaire: RENAULT S.A.S., 92100 Boulogne Billancourt (FR)
(72) Inventeur: GUEGAN, Stéphane, F-78000 Versailles (FR)
(86) Numéro de dépôt international: PCT/FR2006/051035
(87) Numéro de publication internationale: WO 2007/071852

(56) Documents cités:
- EP-A- 0 415 451
- EP-A- 1 568 576
- DE-A1- 19 720 440
- FR-A- 2 864 001
- US-A- 5 954 774

## Description

La présente invention est relative à un procédé de commande de l'angle de braquage de roue arrière directrice d'un véhicule automobile comprenant un essieu de roues avant directrices dont l'angle de braquage est réglé par un volant et un essieu de roues arrière directrices, suivant lequel on tire ledit angle de braquage de roue arrière d'une loi de commande fonction de variables d'entrée comprenant au moins l'angle de rotation du volant et la vitesse du véhicule. La présente invention est aussi relative à un dispositif pour la mise en oeuvre de ce procédé. La présente invention est aussi relative à un véhicule automobile équipé d'un tel dispositif.

On connaît un tel procédé et un tel dispositif de la demande de brevet français n°2 864 001 déposée le 18 décembre 2003 par la demanderesse. Ceux-ci permettent de piloter l'angle de braquage des roues arrière d'un véhicule automobile dit « à 4 roues directrices » comprenant un châssis supporté par un essieu de deux roues avant, dont l'angle de braquage est ajusté par un volant de direction mànoeuvré par le conducteur du véhicule, et par un essieu de deux roues arrière dont l'angle de braquage est ajusté par un actionneur, tel qu'un moteur électrique par exemple, commandé par un calculateur dûment programmé pour exécuter une loi de commande de cet angle, fonction d'au moins l'angle de braquage des roues avant et de la vitesse du véhicule.

S'il arrive que ces variables d'entrée de la loi de commande prennent des valeurs erronées, la valeur de la consigne d'angle de braquage arrière déterminée au moyen de la loi de commande sera alors également erronée. On peut imaginer que, dans le pire des cas, il puisse en résulter une perte de contrôle du véhicule par son conducteur et donc une situation dangereuse pour celui-ci et ses passagers éventuels. Il convient donc de mettre en place des moyens permettant de supprimer ce risque.

La présente invention à précisément pour but de fournir des moyens de sécurisation du procédé de commande évoqué ci-dessus.

La présente invention a aussi pour but de fournir un tel procédé de commande sécurisé, adapté à un véhicule automobile équipé d'un réseau local de communications comprenant un bus de distribution de signaux, notamment des signaux représentatifs des variables d'entrée de la loi de commande mise en oeuvre par ce procédé.

On atteint ces buts de l'invention, ainsi que d'autres qui apparaîtront à la lecture de la description qui va suivre, avec un procédé de commande de l'angle de braquage de roue arrière d'un véhicule automobile comprenant un essieu de roues avant directrices dont l'angle de braquage est réglé par un volant et un essieu de roues arrière directrices, suivant lequel on tire l'angle de braquage de roue arrière d'une loi de commande fonction de variables d'entrée comprenant au moins l'angle de rotation dudit volant et la vitesse dudit véhicule, ce procédé étant remarquable en ce qu'on détecte l'apparition d'une valeur erronée d'au moins une des variables d'entrée et en ce qu'on remplace alors cette valeur par une valeur antérieure sure de la variable.

En remplaçant ainsi la valeur courante erronée par une valeur antérieure valide et récente propre à être bien représentative de la valeur actuelle réelle de la variable considérée, on permet à la loi de commande de produire une valeur correcte de l'angle de braquage arrière, non affectée par l'erreur détectée.

Selon d'autres caractéristiques de la présente invention :
- si la production de la valeur erronée persiste pendant une durée supérieure à une durée prédéterminée, on substitue au mode de calcul de l'angle de braquage arrière défini par la loi de commande, un mode de calcul sécurisé de cet angle,
- le mode de calcul sécurisé ramène progressivement l'angle de braquage arrière à zéro,
- le procédé est mis en oeuvre dans un véhicule équipé d'un réseau local de communications comprenant un bus de distribution d'au moins lesdites variables d'entrée sous la forme de données numériques échantillonnées. A la détection d'une valeur erronée d'un échantillon courant de l'une des données numériques, on remplace cet échantillon par un échantillon antérieur sûr de la donnée, pour le calcul de l'angle de braquage arrière au moyen de la loi de commande,
- on compare la valeur de l'échantillon courant de la donnée disponible sur ledit bus à des valeurs significatives de son invalidité ou de son absence sur le bus, et on règle en conséquence la valeur d'un drapeau signalant l'une quelconque de ladite invalidité ou de ladite absence,
- sur une période de l'échantillonnage, on mesure le gradient de la vitesse du véhicule, on compare ce gradient à une valeur limite prédéterminée de ce gradient et on règle en conséquence la valeur d'un drapeau signalant un éventuel dépassement de cette valeur limite,
- on mesure le gradient due l'angle de rotation du volant, on compare ce gradient à une valeur limite prédéterminée de ce gradient et on règle en conséquence la valeur d'un drapeau signalant un éventuel dépassement de cette valeur limite,
- la mesure du gradient est temporisée,
- une des variables d'entrée étant constituée par le sens de marche du véhicule, on vérifie la cohérence de cette variable, telle que lue sur ledit bus, avec l'état du véhicule, en marche avant ou arrière ou encore à l'arrêt, et on règle en conséquence la valeur d'un drapeau signalant une éventuelle erreur sur l'échantillon courant de cette variable,
- au maintien de l'un quelconque des drapeaux précités dans l'état signalant une erreur sur la variable d'entrée associée pendant une durée supérieure à une durée prédéterminée, on calcule l'angle de braquage arrière au moyen du mode de calcul sécurisé,

Pour la mise en oeuvre du procédé suivant l'invention, celle-ci fournit un dispositif comprenant des moyens propres à exécuter la loi de commande et des moyens sensibles à une consigne d'angle de braquage arrière tirée de cette loi pour asservir cet angle à cette consigne, ce dispositif étant remarquable en ce qu'il comprend des moyens de surveillance de signaux représentatifs des variables d'entrée de la loi de commande, propres à signaler une erreur dans la valeur courante de l'une quelconque de ces variables et à remplacer cette valeur courante par une valeur antérieure sure de la variable.

Suivant d'autres caractéristiques de ce dispositif :
- les moyens d'exécution de la loi de commande comprennent des moyens d'exécution d'un mode de calcul sécurisé de l'angle de braquage arrière,
- le dispositif comprend en outre des moyens de gestion d'état sensibles à la détection d'une erreur par les moyens de surveillance des signaux et à des signaux sécurisés délivrés par ces moyens de surveillance en ce qui concerne la vitesse et le sens de marche du véhicule, pour délivrer aux moyens d'exécution de la loi de commande une information sure concernant l'état du véhicule, à l'arrêt, en marche avant ou arrière, propre à assurer un choix adéquat de cette loi de commande par les moyens d'exécution de cette loi,
- cette information est aussi délivrée aux moyens de surveillance, ceux-ci comprenant des moyens de vérification de la cohérence de la variable relative au sens de marche du véhicule avec ladite information.

D'autres caractéristiques et avantages de la présente invention apparaîtront à la lecture de la description qui va suivre et à l'examen du dessin annexé, dans lequel :
- la figure 1 est .un schéma bloc du dispositif de commande de l'angle de braquage de roue arrière suivant la présente invention,
- la figure 2 est un diagramme fonctionnel d'un module dit de "gestion d'états", du schéma bloc de la figure 1, et
- les figures 3, 4 et 5 sont des organigrammes de programmes de détection et de correction d'erreurs dans les valeurs courantes de l'angle de rotation du volant de direction, de la vitesse et du sens de marche du véhicule respectivement, illustrant le procédé suivant l'invention.

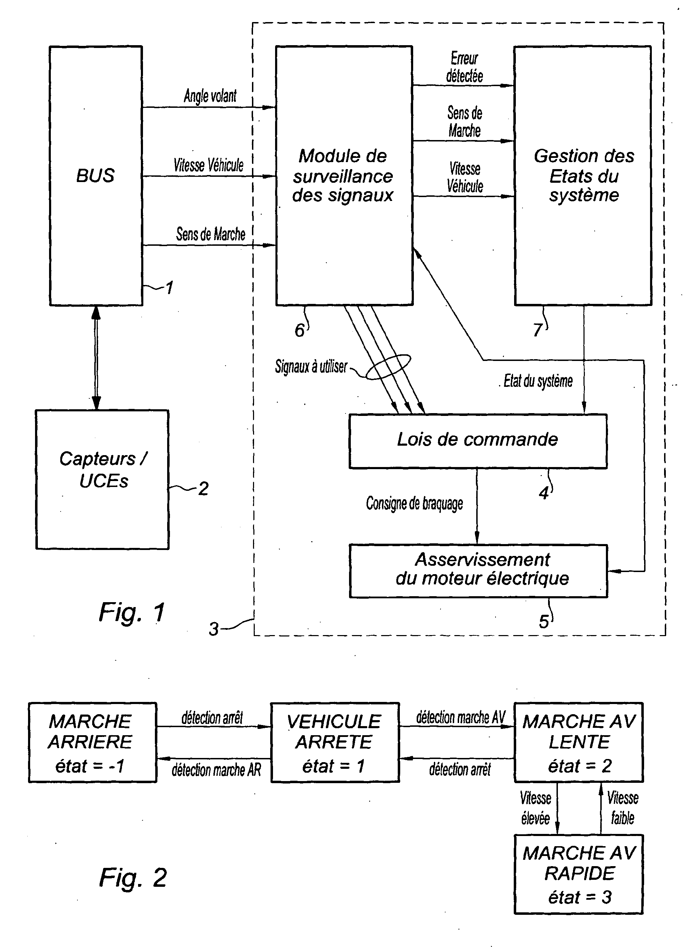

On se réfère à la figure 1 du dessin annexé où il apparaît que, selon un mode de réalisation préféré de la présente invention, celle-ci est incorporée à un véhicule automobile équipé d'un réseau local de communications de données tel que le réseau CAN couramment intégré aux véhicules automobiles de conception récente. Un tel réseau comprend notamment un bus 1 interconnectant divers capteurs et calculateurs, regroupés sous le repère 2. Comme cela est bien connu, les capteurs fournissent aux calculateurs (dits aussi unités de commande électroniques UCE) des signaux numériques échantillonnés représentatifs de grandeurs intervenant dans la gestion, par ces calculateurs, d'ensembles fonctionnels du véhicule tels que le groupe de propulsion, la suspension ou les moyens d'antiblocage des roues du véhicule, par exemple.

Le dispositif suivant l'invention s'intègre à ce système sous la forme d'un calculateur numérique 3, spécifique ou partagé avec d'autres ensembles du véhicule. Ce calculateur est dûment programmé pour exécuter une ou des lois de commande 4 de l'angle de braquage arrière. On pourra se référer à cet égard à la demande de brevet français n° 2 864 001 précitée pour prendre connaissance des caractéristiques d'une loi de commande utilisable dans la présente invention. Bien entendu, cette référence est donnée à titre illustratif et non limitatif seulement.

On tire de la loi de commande une consigne de braquage délivrée à des moyens d'asservissement 5 d'un actionneur (non représenté), propre à régler mécaniquement l'angle de braquage des roues arrière du véhicule à la valeur de l'angle de consigne. Comme on l'a vu plus haut, un tel actionneur peut être constitué par un moteur électrique, asservi en position et/ ou en puissance.

Le calculateur 3 est connecté au bus 1 pour y prélever des signaux représentatifs de valeurs numériques courantes échantillonnées des variables d'entrée de la loi de commande 4. Comme on l'a vu plus haut, ces variables comprennent au moins l'angle de rotation du volant et à vitesse du véhicule. Ces variables sont mises sur le bus par des moyens de mesure ou de calcul bien connus dans la technique. Dans la présente invention ces variables comprennent en outre, avantageusement, le sens de marche du véhiculé. Cette variable prend trois valeurs distinctes, suivant que le véhicule est en marche avant ou arrière, ou encore à l'arrêt. Cette information permet d'activer des lois de commande différemment paramétrées suivant que le véhicule circule en marche avant ou arrière voire, comme on le verra plus loin, suivant qu'il avance à petite ou grande vitesse.

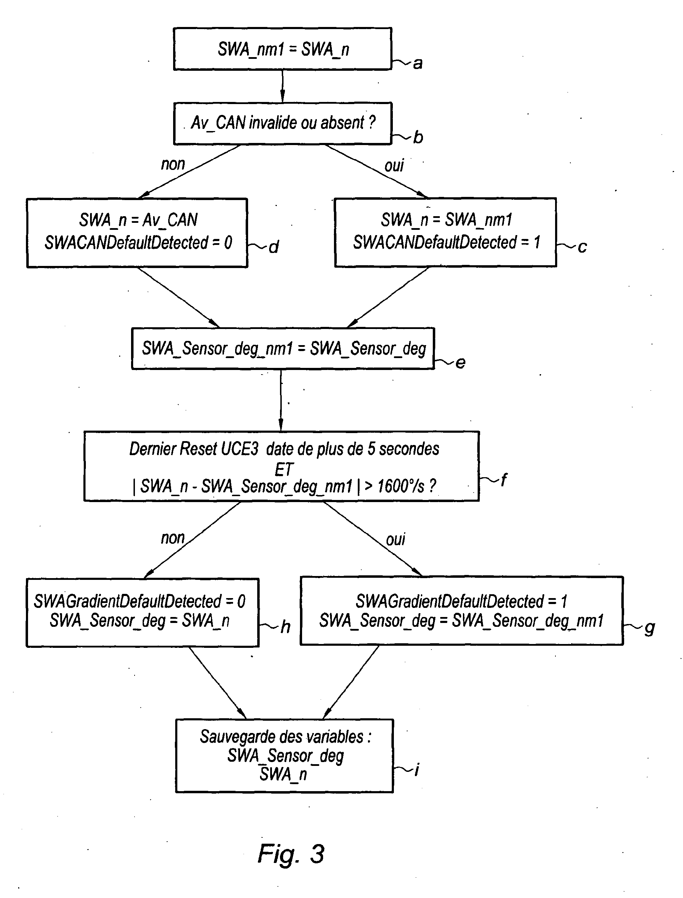

Selon une caractéristique de la présente invention, les signaux disponibles sur le bus 1 et représentatifs de l'angle du volant, de la vitesse et du sens de marche du véhicule respectivement, sont d'abord traités dans un module 6 de surveillance de ces signaux avant d'être pris en compte par les moyens 4 d'exécution des lois de commande de l'angle de braquage arrière. Les traitements appliqués à ces signaux seront détaillés dans la suite, en liaison avec les figures 3 à 5.

Sur la figure 1 il apparaît encore que le module 6 de traitement des signaux délivre, à un module 7 dit de "gestion d'états" du système constitué par un véhicule équipé du dispositif suivant la présente invention, des informations relatives au sens de marche et à la vitesse du véhicule et lui signale en outre toute erreur détectée dans les signaux traités dans ce module. Le schéma bloc de la figure 2 détaille les fonctionnalités du module 7. Le module 7 identifie l'état de fonctionnement actuel du véhicule, qui peut être en marche arrière (état = -1), à l'arrêt (état = 1), en marche avant à vitesse lente (état = 2) ou à vitesse rapide ( état = 3). A l'aide dès signaux fournis il détecte les transitions entre ces différents états, transitions qui sont représentées à la figure 2 par des flèches identifiant les transitions détectées : Détection_arrêt, Détection_marche avant, Détection_marche arrière, Vitesse élevée, Vitesse faible.

Le module 7 délivre cette information d'état aux moyens 4 d'exécution des lois de commande 4, aux moyens d'asservissement 5 du moteur électrique et au module 6 de surveillance des signaux. Cette information d'état permet aux moyens 4 de sélectionner une loi de commande adaptée à l'état détecté. C'est ainsi que la stratégie de commande de l'angle de braquage arrière pourra être différente en marche avant et en marche arrière, et même en marche avant lente ou rapide. Comme on le verra plus loin, en cas de détection d'une erreur persistante dans au moins une des variables d'entrée de la loi de commande applicable, un mode de calcul "dégradé", mais sécurisé, de l'angle de braquage arrière est sélectionné par les moyens d'exécution 4.

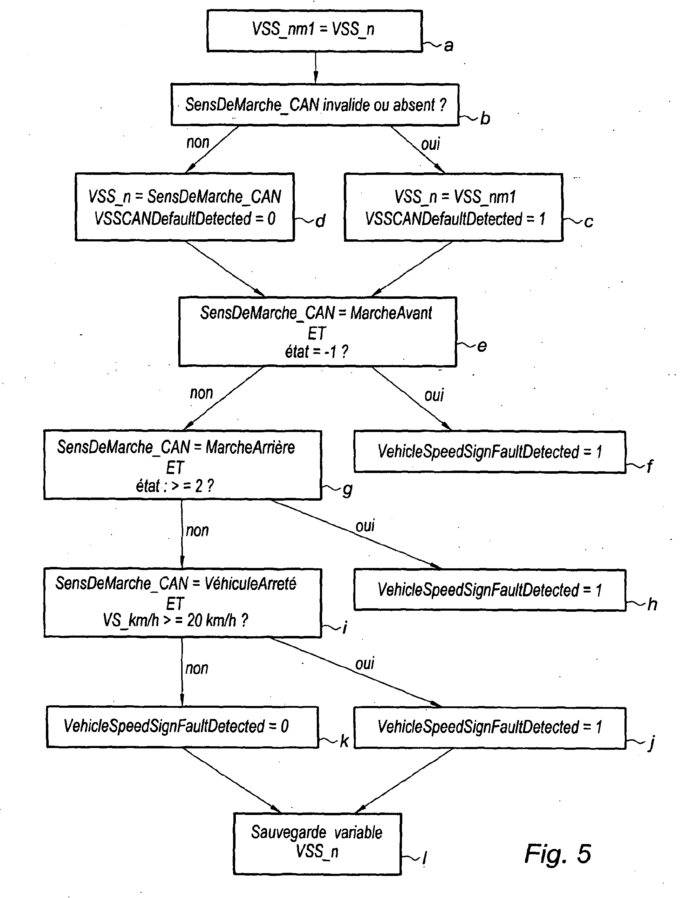

Comme on le verra en détail en liaison avec la figure 5, l'information d'état délivrée par le module 7 est aussi exploitée par le module 6 de surveillance des signaux pour contrôler la cohérence des évolutions du signal relatif au sens de marche du véhicule délivré par le bus 1. Ce contrôle permet de sécuriser cette information par la détection d'une erreur sur celle-ci, révélée par son éventuelle incohérence de son évolution avec l'état du système.

On se réfère maintenant à l'organigramme de la figure 3 pour détailler les étapes de la stratégie appliquée par le module de traitement des signaux en vue de détecter l'apparition d'une erreur éventuelle dans l'échantillon courant de la valeur de l'angle volant lu sur le bus 1, et de corriger ou compenser alors cette erreur.

A l'apparition, sur le bus 1 du réseau CAN, de chaque échantillon courant SWA_n de la variable Av_CAN relative à l'angle volant (étape a), le module 6 compare celui-ci à des valeurs significatives de l'absence ou de l'invalidité de l'information disponible sur le bus relative à cette variable (étape b). Si le résultat de ce test est positif, un drapeau, ou "flags", SWACANDefault-Detected est mis à 1 et on remplace l'échantillon courant SWA_n par l'échantillon d'ordre (n-1) immédiatement antérieur, SWA_nm1 (étape c). Dans le cas contraire l'échantillon SWA_n est validé comme représentatif de l'angle volant Av_CAN tel que lu sur le bus et le drapeau précité est mis, ou confirmé, à 0 (étape d).

On appelle SWA_sensor_deg la valeur en degrés de l'angle volant tel que détecté par le capteur d'angle volant, à utiliser par les autres blocs du calculateur 3. A l'étape e, on égale cette valeur à celle de l'échantillon antérieur d'ordre nm1 de cette valeur.

On conçoit que cette prise en compte de l'échantillon immédiatement antérieur est parfaitement légitime dans des conditions de roulage normales du véhicule, l'angle volant évoluant alors lentement lors d'une période de la fréquence d'échantillonnage du signal délivré par le capteur d'angle volant, cette période étant couramment de l'ordre de 10 ms.

On a pu établir expérimentalement, par ailleurs, que l'angle volant ne pouvait pas varier à une vitesse supérieure à 1600°/s. Tout dépassement de cette valeur est alors significatif d'une erreur affectant la lecture de cet angle. A l'étape f on teste cette condition de validité en comparant la valeur absolue du gradient de la variation de l'angle volant entre les instants d'échantillonnage nm1 et n, à une valeur limite considérée comme maximale. Avec la période d'échantillonnage de 10ms donnée ci-dessus, cette valeur limite est alors de 16°, soit 1600°/s. La mesure du gradient est temporisée, de 5 s par exemple, par rapport à la dernière remise à zéro (reset) du calculateur 3 pour éviter des détections de gradients supérieurs à cette valeur limite dans les phases de réveil et d'initialisation du calculateur, pendant lesquelles il peut se produire des sauts de valeurs dus à des changements d'états de ce calculateur, susceptibles de provoquer de fausses détections d'erreurs.

En cas de dépassement de cette valeur limite, un flag SWAGradientDefaultDetected est mis à 1 et l'échantillon antérieur d'ordre nm1 de l'angle volant SWA_Sensor_deg est pris en compte dans les blocs suivants (étape g). Dans le cas contraire ce flag reste à 0 et l'échantillon actuel SWA_n disponible sur le bus est pris en compte dans les calculs à venir (étape h). A l'étape i on sauvegarde la valeur de SWA_Sensor_deg, utilisée ensuite par les moyens d'exécution 4 de la loi de commande, et de SWA_n.

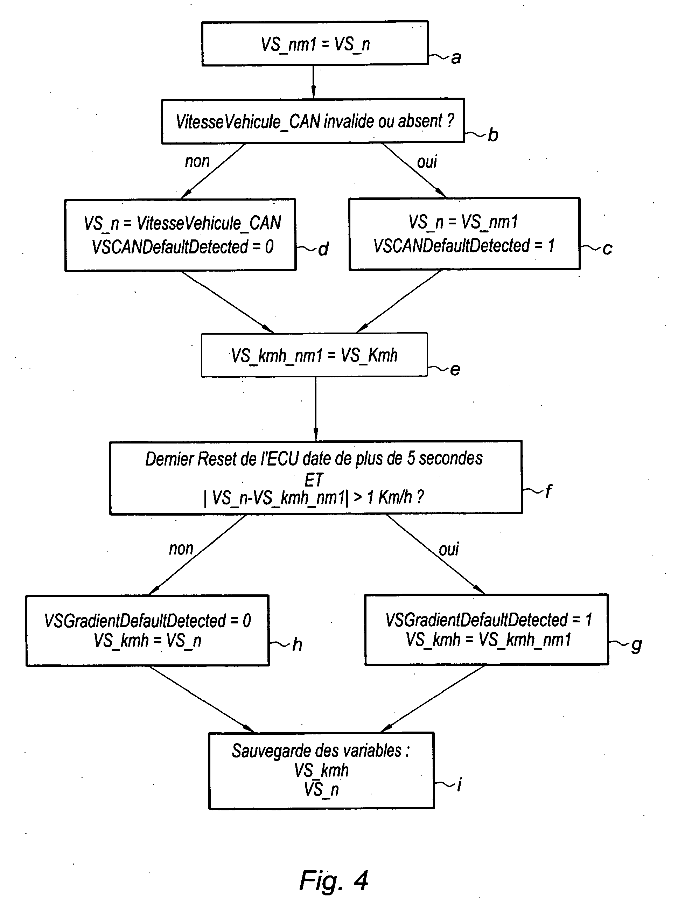

On se réfère maintenant à l'organigramme de la figure 4 pour détailler les étapes du processus de détection d'une erreur éventuelle dans la mesure de la vitesse du véhicule, et de correction ou compensation de cette erreur. Ce processus est d'ailleurs très semblable à celui décrit ci-dessus en liaison avec la figure 3, concernant l'angle volant.

A l'apparition, sur le bus 1 du réseau CAN, de chaque échantillon VS_n de la valeur courante VitesseVéhicule_ CAN de la vitesse du véhicule (étape a), le module 6 compare celui-ci à des valeurs significatives de l'absence ou de l'invalidité de cet échantillon (étape b). Si le résultat de ce test est positif, un "flag", VSCANDefault_Detected est mis à 1 et on remplace l'échantillon courant VS_n par l'échantillon immédiatement antérieur VS_nm1 (étape c). Dans le cas contraire l'échantillon VS_n est validé comme représentatif de la vitesse du véhicule VitesseVéhicute_CAN telle que lue sur le bus et le drapeau précité est mis, ou confirmé, à 0 (étape d).

On appelle VS_kmh la valeur en kmh de la vitesse du véhicule telle que détectée par un capteur adapté à cette mesure, à utiliser par les autres blocs du calculateur 3. A l'étape e, on égale cette valeur à celle de l'échantillon antérieur d'ordre nm1 de cette valeur.

Cette substitution est légitimée par une observation analogue à celle évoquée ci-dessus à propos de l'angle volant, la vitesse du véhicule variant normalement très peu pendant la période d'échantillonnage, fixée ici à 20 ms.

On a pu établir expérimentalement, par ailleurs, que la vitesse du véhicule ne pouvait pas varier de plus de 1 kmh pendant ces 20 ms. Tout dépassement de cette valeur est alors significatif d'une erreur affectant la lecture de cette vitesse. A l'étape f on teste cette condition de validité en comparant cette valeur limite à la valeur absolue du gradient de la variation de la vitesse entre les instants d'échantillonnage nm1 et n. La mesure du gradient est temporisée, de 5 s par exemple, par rapport à la dernière remise à zéro (reset) du calculateur 3.

En cas de dépassement de cette valeur limite, un flag VSGradientDefaultDetected est mis à 1 et l'échantillon antérieur d'ordre nm1 de la vitesse VS_kmh_nm1 est pris en compte dans les autres blocs du calculateur (étape g). Dans le cas contraire ce flag reste à 0 et l'échantillon actuel VS_n disponible sur le bus est pris en compte dans les calculs à venir (étape h). A l'étape i on sauvegarde la valeur de VS_kmh, utilisée ensuite par les moyens d'exécution 4 de la loi de commande, et de VS_n.

On se réfère maintenant à l'organigramme de la figure 5 pour décrire le processus de détection d'erreur et de correction de l'information disponible sur le bus 1 et relative au sens de marche du véhicule.

On notera qu'il est essentiel de disposer d'une information fiable sur ce point. En effet, les stratégies de commande de l'angle de braquage arrière sont très différentes en marche avant et en marche arrière. Si l'information "sens de marche" passe brutalement, et de manière erronée, d'une valeur correspondant à la marche avant à une valeur correspondant à la marche arrière, à une vitesse non nulle du véhicule, la consigne d'angle de braquage arrière saute également brusquement de la valeur actuelle à une valeur sensiblement différente du fait que deux lois de commande différentes auront été successivement appelées pour calculer ces valeurs. Le saut d'angle de braquage arrière qui en résulte est susceptible de mettre en difficulté le conducteur du véhicule.

Pour prévenir ce risque, suivant la présent invention, le module 7 de gestion des états du système délivre des informations relatives à l'état de ce système au module 6 de surveillance des signaux, pour permettre à ce dernier de s'assurer de la cohérence de la valeur de l'information "sens de marche" avec les évolutions de l'état du système, telles que déterminées par le module 6.

Sur le diagramme des états représenté à la figure 2, il apparaît en effet que pour passer d'un mode de fonctionnement en marche avant, lente ou rapide, à un mode de fonctionnement en marche arrière, le système doit nécessairement passer par l'état "véhicule arrêté". L'information "sens de marche" reçue par le module 6 doit rester cohérente avec l'état du système, établi par le module 7, de même que leurs évolutions.

L'organigramme de la figure 5 explicite le processus de vérification de cette cohérence.

Tout d'abord, de même que pour l'angle volant et la vitesse du véhicule, si l'information de sens de marche VSS_n lue sur le bus est absente ou vaut la valeur représentative de son invalidité, un flag VSSCANDefaultDetected est mis à 1. Dans le cas contraire il est mis à zéro (voir les étapes a à d). Suivant les cas, l'échantillon VSS_nm1 ou VSS_n est retenu comme information SensDetvtarche_CAN prise en compte dans la suite comme représentative du sens de marche du véhicule tel qu'il peut être lu sur le bus.

On examine ensuite, dans les trois états possibles du véhicule (marche avant, marche arrière, véhicule arrêté) la cohérence ou l'incohérence éventuelle de l'information relative à cet état délivrée par le module 7, avec celle fournie par l'information SensDeMarche_CAN délivrée par le bus.

C'est ainsi qu'à l'étape e, on scrute l'occurrence d'une situation dans laquelle l'information SensDeMarche_CAN indique une marche avant alors que le système, tel que vu par le module 7 de gestion d'états, est dans l'état -1 correspondant à une marche arrière. A la détection d'une telle situation un flag VehicleSpeedSignFaultDetected est mis à 1 (étape f). En l'absence d'une telle situation ce flag reste à zéro et on passe à l'étape g dans laquelle on scrute l'occurrence de la situation suivant laquelle l'information SensDeMarche_CAN indique une marche arrière alors que l'état du véhicule, tel que codé par le module 7 (voir figure 2), est supérieur ou égal à 2 (véhicule en marche avant lente ou rapide). A l'occurrence de cette situation le flag VehicleSpeedSignFaultDetected est mis à 1 (étape h). En l'absence de cette situation, ce flag reste à zéro et on passe à la situation dans laquelle SensDetvtarche_CAN prend une valeur indiquant un véhicule arrêté alors que l'information VS_kmh relative à la vitesse actuelle du véhicule indique pour cette vitesse une valeur non nulle (étape i) du fait que cette vitesse est supérieure ou égale à une valeur de seuil relativement basse, telle que 20 km/h par exemple. A l'occurrence de cette situation le flag précité passe à 1 (étape j) alors qu'il reste à zéro en son absence (étape k).

Ces trois tests de cohérence étant exécutés, on sauvegarde la variable représentative du sens de marche du véhicule pour la suite des calculs, celle-ci étant égale à VSS_n ou VSS_nm1 comme on l'a vu plus haut en liaison avec les étapes c et d de l'organigramme de la figure 5.

Les trois variables d'entrée des lois de commande de l'angle de braquage arrière ayant ainsi été validées par le module 6, sont prises en compte par les moyens 4 d'exécution de ces lois pour le choix de la loi applicable d'une part, et pour l'exécution proprement dite de cette loi, d'autre part.

A cet égard, suivant une autre caractéristique de la présente invention, si l'un quelconque des flags précités reste à 1 pendant une durée considérée comme anormalement élevée ( par exemple 50 ms) significative de la présence d'une erreur persistante sur l'une au moins des variables d'entrée des lois de commande, ce qui est susceptible de fausser la valeur de l'angle de braquage calculé au moyen de ces lois, on substitue à celles-ci un mode de calcul "dégradé", mains sécurisé, de cet angle de braquage, qui ramène progressivement celui-ci à zéro. On perd alors temporairement les avantages que l'on tire normalement d'un réglage adapté de la valeur de cet angle, mais cette perte est compensée par un gain en matière de sécurité du véhicule.

Il apparaît maintenant que l'invention permet bien de sécuriser le calcul de l'angle de braquage arrière en cas d'erreur fugitive sur une ou plusieurs des variables d'entrée intervenant dans ce calcul, et de sécuriser aussi le comportement du véhicule en cas d'erreur persistante sur celles-ci.

## Revendications

1. Procédé de commande de l'angle de braquage de roue arrière d'un véhicule automobile comprenant un essieu de roues avant directrices dont l'angle de braquage est réglé par un volant et un essieu de roues arrière directrices, suivant lequel on tire ledit angle de braquage de roue arrière d'une loi de commande fonction de variables d'entrée comprenant au moins l'angle de rotation dudit volant (SWA_Sensor_deg) et la vitesse (VS_kmh) dudit véhicule, dans lequel on détecte l'apparition d'une valeur erronée d'au moins une desdites variables d'entrée et **caractérisé en ce qu'**on remplace alors ladite valeur par une valeur antérieure sure de ladite variable.

2. Procédé conforme à la revendication 1, **caractérisé en ce que** si la production de ladite valeur erronée persiste pendant une durée supérieure à une durée prédéterminée, on substitue au mode de calcul dudit angle de braquage arrière défini par ladite loi de commande, un mode de calcul sécurisé dudit angle.

3. Procédé conforme à la revendication 2, **caractérisé en ce que** ledit mode de calcul sécurisé ramène progressivement ledit angle de braquage arrière à zéro.

4. Procédé conforme à l'une quelconque des revendications 1 à 3, mis en oeuvre dans un véhicule équipé d'un réseau local de communications comprenant un bus (1) de distribution d'au moins lesdites variables d'entrée sous la forme de données numériques échantillonnées (SWA_n,VS_n,VSS_n), **caractérisé en ce que**, à la détection d'une valeur erronée d'un échantillon courant de l'une desdites données numériques, on remplace ledit échantillon par un échantillon antérieur sûr (SWA_nm1,VS_nm1,VSS_nm1) de ladite donnée, pour le calcul dudit angle de braquage arrière au moyen de ladite loi de commande.

5. Procédé conforme à la revendication 4, **caractérisé en ce qu'**on compare la valeur dudit échantillon courant de ladite donnée disponible sur ledit bus (1) à des valeurs significatives de son invalidité ou de son absence sur ledit bus (1), et on règle en conséquence la valeur d'un drapeau signalant l'une quelconque de ladite invalidité ou de ladite absence.

6. Procédé conforme à l'une quelconque des revendications 4 et 5, **caractérisé en ce que**, sur une période de l'échantillonnage, on mesure le gradient de la vitesse du véhicule, on compare ledit gradient à une valeur limite prédéterminée dudit gradient et on règle en conséquence la valeur d'un drapeau signalant un éventuel dépassement de ladite valeur limite.

7. Procédé conforme à l'une quelconque des revendications 4 à 6, **caractérisé en ce que**, sur une période de l'échantillonnage, on mesure le gradient de l'angle de rotation du volant, on compare ledit gradient à une valeur limite prédéterminée dudit gradient et on règle en conséquence la valeur d'un drapeau signalant un éventuel dépassement de ladite valeur limite.

8. Procédé conforme à l'une quelconque des revendications 6 et 7, **caractérisé en ce que** ladite mesure dudit gradient est temporisée.

9. Procédé conforme à l'une quelconque des revendications 4 à 8, dans lequel l'une desdites variables d'entrée est constituée par le sens de marche dudit véhicule, **caractérisé en ce qu'**on vérifie la cohérence de ladite variable (SensDe Marche_CAN), telle que lue sur ledit bus, avec l'état du véhicule, en marche avant ou arrière ou encore à l'arrêt, et on règle en conséquence la valeur d'un drapeau signalant une éventuelle erreur sur l'échantillon courant de ladite variable.

10. Procédé conforme à l'une quelconque des revendications 4 à 9, **caractérisé en ce que**, au maintien de l'un quelconque desdits drapeaux dans l'état signalant une erreur sur la variable d'entrée associée pendant une durée supérieure à une durée prédéterminée, on calcule ledit angle de braquage arrière au moyen dudit mode de calcul sécurisé.

11. Dispositif **caractérisé par** la mise en oeuvre du procédé conforme à l'une quelconque des revendications 1 à 10, comprenant des moyens (4) propres à exécuter ladite loi de commande et des moyens (5) sensibles à une consigne d'angle de, braquage arrière tirée de ladite loi pour asservir ledit angle à ladite consigne, **caractérisé en ce qu'**il comprend des moyens (6) de surveillance de signaux représentatifs des variables d'entrée de ladite loi de commande, propres à signaler une erreur dans la valeur courante de l'une quelconque desdites variables et à remplacer ladite valeur courante par une valeur antérieure sure de ladite variable.

12. Dispositif conforme à la revendication 11, **caractérisé en ce que** lesdits moyens (4) d'exécution de ladite loi de commande comprennent des moyens d'exécution d'un mode de calcul sécurisé dudit angle de braquage arrière.

13. Dispositif conforme à l'une quelconque des revendications 11 et 12, **caractérisé en ce qu'**il comprend des moyens (7) de gestion d'état sensibles à la détection d'une erreur par lesdits moyens (6) de surveillance desdits signaux et à des signaux sécurisés délivrés par lesdits moyens (6) en ce qui concerne la vitesse et le sens de marche dudit véhicule, pour délivrer aux moyens (4) d'exécution de ladite loi de commande une information sure concernant l'état du véhicule, à l'arrêt, en marche avant ou arrière, propre à assurer un choix adéquat de ladite loi de commande par lesdits moyens (4) d'exécution de ladite loi.

14. Dispositif conforme à la revendication 13, **caractérisé en ce que** ladite information est aussi délivrée auxdits moyens de surveillance (6), ceux-ci comprenant des moyens de vérification de la cohérence de la variable (SensDe Marche_CAN) relative au sens de marche du véhicule avec ladite information.

15. Véhicule automobile équipé d'un dispositif conforme à l'une quelconque des revendications 11 à 14.

## Claims

1. Method for controlling the steering angle of the rear wheels of a motor vehicle comprising a front axle of steered front wheels, the steering angle of which is set by a steering wheel and a rear axle of steered rear wheels, whereby said rear wheel steering angle is taken from a control law that is a function of input variables comprising at least the angle of rotation of said steering wheel (SWA_Sensor_deg) and the speed (VS_kmh) of said vehicle, in which method the appearance of an erroneous value of at least one of said input variables is detected and **characterized in that** said value is then replaced with a reliable earlier value of said variable.

2. Method according to Claim 1, **characterized in that** if the production of said erroneous value persists for a length of time longer than a predetermined duration, then a safer method of calculating said rear steering angle is substituted for the method of calculating said angle defined by said control law.

3. Method according to Claim 2, **characterized in that** said safer method of calculation progressively returns said rear steering angle to zero.

4. Method according to any one of Claims 1 to 3, employed in a vehicle equipped with a local communications network comprising a bus (1) for distributing at least said input variables in the form of sampled digital data (SWA_n, VS_n, VSS_n), **characterized in that**, upon detection of an erroneous value in a current sample of one of said digital data, said sample is replaced by a reliable earlier sample (SWA_nml, VS_nml, VSS_nml) of said data, for calculating said rear steering angle using said control law.

5. Method according to Claim 4, **characterized in that** the value of said current sample of said data available on said bus (1) is compared against values indicating its invalidity or its absence on said bus (1), and the value of a flag indicating either one of said invalidity or said absence is set accordingly.

6. Method according to either one of Claims 4 and 5, **characterized in that**, over a sampling period, the vehicle speed gradient is measured, said gradient is compared against a predetermined limit value of said gradient and the value of a flag indicating any exceeding of said limit value is set accordingly.

7. Method according to any one of Claims 4 to 6, **characterized in that**, over a sampling period, the steering wheel angle of rotation gradient is measured, said gradient is compared against a predetermined limit value of said gradient and the value of a flag indicating any exceeding of said limit value is set accordingly.

8. Method according to either one of Claims 6 and 7, **characterized in that** said measurement of said gradient is timed.

9. Method according to any one of Claims 4 to 8, in which one of said input variables consists of the direction of travel of said vehicle, **characterized in that** consistency of said variable (DirectionofTravel_CAN) as read off said bus with the state of the vehicle, in forward gear or reverse or alternatively stationary, is checked and the value of a flag indicating any error in the current sample of said variable is set accordingly.

10. Method according to any one of Claims 4 to 9, **characterized in that**, while any one of said flags remains in the state indicating an error with the associated input variable for a length of time that exceeds a predetermined duration, said rear steering angle is calculated using said safer method of calculation.

11. A device **characterized by** the implementation of the method according to any one of Claims 1 to 10, comprising means (4) capable of executing said control law and means (5) sensitive to a rear steering angle instruction taken from said law in order to force said angle to adopt said instructed value, **characterized in that** it comprises means (6) of monitoring signals representative of the input variables of said control law which are capable of indicating an error in the current value of any one of said variables and of replacing said current value with a reliable earlier value of said variable.

12. Device according to Claim 11, **characterized in that** said means (4) of executing said control law comprise means of executing a safer method of calculating said rear steering angle.

13. Device according to either one of Claims 11 and 12, **characterized in that** it comprises state management means (7) sensitive to detection of an error by said means (6) of monitoring said signals and to safer signals delivered by said means (6) with regard to the speed and direction of travel of said vehicle, so as to deliver reliable information regarding the state of the vehicle, whether stationary, in a forward or reverse gear, to the means (4) of executing said control law so that said means (4) of executing said control law can select said law appropriately.

14. Device according to Claim 13, **characterized in that** said information is also delivered to said monitoring means (6), these comprising means of checking the consistency of the variable (DirectionOfTravel_CAN) relating to the direction of travel of the vehicle with said information.

15. Motor vehicle equipped with a device according to any one of Claims 11 to 14.

## Patentansprüche

1. Verfahren zur Steuerung des Hinterrad-Lenkwinkels eines Kraftfahrzeugs, das eine Achse gelenkter Vorderräder, deren Lenkwinkel durch ein Lenkrad geregelt wird, und eine Achse gelenkter Hinterräder enthält, gemäß dem der HinterradLenkwinkel aus einem Steuerungsgesetz entnommen wird, das von Eingangsvariablen abhängt, die mindestens den Drehwinkel des Lenkrads (SWA_Sensor_deg) und die Geschwindigkeit (VS_kmh) des Fahrzeugs enthalten, wobei das Auftreten eines fehlerhaften Werts mindestens einer der Eingangsvariablen erfasst wird, **dadurch gekennzeichnet, dass** dann dieser Wert durch einen früheren sicheren Wert der Variablen ersetzt wird.

2. Verfahren nach Anspruch 1, **dadurch gekennzeichnet, dass**, wenn die Erzeugung des fehlerhaften Werts während einer längeren Dauer als eine vorbestimmte Dauer fortbesteht, der Berechnungsmodus des durch das Steuerungsgesetz definierten hinteren Lenkwinkels durch einen gesicherten Berechnungsmodus des Winkels ersetzt wird.

3. Verfahren nach Anspruch 2, **dadurch gekennzeichnet, dass** der gesicherte Berechnungsmodus den hinteren Lenkwinkel progressiv auf Null zurückführt.

4. Verfahren nach einem der Ansprüche 1 bis 3, angewendet in einem Fahrzeug, das mit einem lokalen Kommunikationsnetz ausgestattet ist, welches einen Bus (1) zur Verteilung mindestens der Eingangsvariablen in Form von abgetasteten digitalen Daten (SWA_n,VS_n,VSS_n) enthält, **dadurch gekennzeichnet, dass**, für die Berechnung des hinteren Lenkwinkels mittels des Steuerungsgesetzes, bei Erfassung eines fehlerhaften Werts einer laufenden Tastprobe eines der digitalen Datenwerte die Tastprobe durch eine sichere frühere Tastprobe (SWA_nm1,VS_nm1, VSS_nm1) des Datenwerts ersetzt wird.

5. Verfahren nach Anspruch 4, **dadurch gekennzeichnet, dass** der Wert der laufenden Tastprobe des auf dem Bus (1) verfügbaren Datenwerts mit für seine Ungültigkeit oder seine Abwesenheit auf dem Bus (1) signifikanten Werten verglichen wird, und dementsprechend der Wert eines Flags geregelt wird, das entweder die Ungültigkeit oder die Abwesenheit anzeigt.

6. Verfahren nach einem der Ansprüche 4 und 5, **dadurch gekennzeichnet, dass**, über eine Abtastperiode, der Gradient der Geschwindigkeit des Fahrzeugs gemessen wird, der Gradient mit einem vorbestimmten Grenzwert des Gradients verglichen wird, und dementsprechend der Wert eines Flags geregelt wird, das eine mögliche Überschreitung des Grenzwerts anzeigt.

7. Verfahren nach einem der Ansprüche 4 bis 6, **dadurch gekennzeichnet, dass**, über eine Abtastperiode, der Gradient des Drehwinkels des Lenkrads gemessen wird, der Gradient mit einem vorbestimmten Grenzwert des Gradients verglichen wird, und dementsprechend der Wert eines Flags geregelt wird, das eine mögliche Überschreitung des Grenzwerts anzeigt.

8. Verfahren nach einem der Ansprüche 6 und 7, **dadurch gekennzeichnet, dass** die Messung des Gradients verzögert ist.

9. Verfahren nach einem der Ansprüche 4 bis 8, bei dem eine der Eingangsvariablen aus der Fahrtrichtung des Fahrzeugs besteht, **dadurch gekennzeichnet, dass** die Kohärenz der Variablen (Fahrtrichtung_CAN), wie sie im Bus abgelesen wird, mit dem Zustand des Fahrzeugs im Vorwärtsgang oder im Rückwärtsgang oder auch im Stillstand überprüft wird, und dementsprechend der Wert eines Flags geregelt wird, das einen möglichen Fehler in der laufenden Tastprobe der Variablen anzeigt.

10. Verfahren nach einem der Ansprüche 4 bis 9, **dadurch gekennzeichnet, dass**, bei Fortbestand eines der Flags in dem Zustand, der einen Fehler in der zugeordneten Eingangsvariablen anzeigt, während einer längeren Dauer als einer vorbestimmten Dauer, der hintere Lenkwinkel mittels des gesicherten Berechnungsmodus berechnet wird.

11. Vorrichtung, **gekennzeichnet durch** die Anwendung des Verfahrens nach einem der Ansprüche 1 bis 10, die Einrichtungen (4), die das Steuerungsgesetz ausführen können, und Einrichtungen (5) enthält, die auf einen aus dem Gesetz entnommenen Sollwert des hinteren Lenkwinkels ansprechen, um den Winkel auf den Sollwert einzustellen, **dadurch gekennzeichnet, dass** sie Einrichtungen (6) zur Überwachung von für die Eingangsvariablen des Steuerungsgesetzes repräsentativen Signalen enthält, die geeignet sind, um einen Fehler in dem laufenden Wert einer der Variablen anzuzeigen und den laufenden Wert **durch** einen früheren sicheren Wert der Variablen zu ersetzen.

12. Vorrichtung nach Anspruch 11, **dadurch gekennzeichnet, dass** die Einrichtungen (4) zur Ausführung des Steuerungsgesetzes Einrichtungen zur Ausführung eines gesicherten Berechnungsmodus des hinteren Lenkwinkels enthalten.

13. Vorrichtung nach einem der Ansprüche 11 und 12, **dadurch gekennzeichnet, dass** sie Einrichtungen (7) zur Zustandsverwaltung enthält, die auf die Erfassung eines Fehlers durch die Einrichtungen (6) zur Überwachung der Signale und auf gesicherte Signale ansprechen, die von den Einrichtungen (6) betreffend die Geschwindigkeit und die Fahrtrichtung des Fahrzeugs geliefert werden, um an die Einrichtungen (4) zur Ausführung des Steuerungsgesetzes eine sichere Information betreffend den Zustand des Fahrzeugs im Stillstand, im Vorwärtsgang oder im Rückwärtsgang zu liefern, die geeignet ist, um eine adäquate Wahl des Steuerungsgesetzes durch die Einrichtungen (4) zur Ausführung des Gesetzes zu gewährleisten.

14. Vorrichtung nach Anspruch 13, **dadurch gekennzeichnet, dass** die Information auch an die Überwachungseinrichtungen (6) geliefert wird, wobei diese Einrichtungen zur Überprüfung der Kohärenz der Variablen (Fahrtrichtung_CAN) bezüglich der Fahrtrichtung des Fahrzeugs mit der Information enthalten.

15. Kraftfahrzeug, das mit einer Vorrichtung nach einem der Ansprüche 11 bis 14 ausgestattet ist.
